# EUROPÄISCHE PATENTSCHRIFT

(11) **EP 3 497 421 B1**
(45) Veröffentlichungstag und Bekanntmachung des Hinweises auf die Patenterteilung: **31.07.2024**
(21) Anmeldenummer: 17735460.2
(22) Anmeldetag: 29.06.2017
(51) Int. Cl.: G01M 1/36

(54) **ROTATIONSKÖRPER**
ROTATIONAL BODY
CORPS ROTATIF

(30) Priorität: 09.08.2016 DE 102016214722
(43) Veröffentlichungstag der Anmeldung: 19.06.2019
(73) Patentinhaber: Bayerische Motoren Werke Aktiengesellschaft, 80809 München (DE)
(72) Erfinder: SCHLAG, Philipp, 81541 München (DE)
(86) Internationale Anmeldenummer: PCT/EP2017/066078
(87) Internationale Veröffentlichungsnummer: WO 2018/028878

(56) Entgegenhaltungen:
- EP-A1- 2 924 853
- WO-A1-00/65323
- WO-A1-2015/113434
- DE-A1- 102009 003 056
- DE-A1- 102012 218 716
- DE-A1- 102013 208 456
- DE-A1- 102016 214 722
- GB-A- 619 587
- US-A- 5 903 967
- US-B1- 7 656 609

## Beschreibung

Die vorliegende Erfindung betrifft einen Rotationskörper, einen Elektromotor sowie ein Verfahren zum Wuchten eines Rotationskörpers.

Jeder um eine feststehende Achse rotierender Körper besitzt eine Unwucht, die zu Vibrationen bzw. Schwingungen, Geräuschen und erhöhtem Verschleiß, bei hohen Drehzahlen sogar zur Zerstörung, führen kann. Wenn die Unwucht zu groß ist, muss ein Ausgleich der Massenverteilung individuell an dem entsprechenden Körper durchgeführt werden. Dieser Ausgleich kann positiv oder negativ erfolgen. Beim positiven Ausgleich werden Ausgleichsmassen aufgetragen, wie z. B. durch Anschweißen, Ankleben, Anklemmen oder Anschrauben von Gewichten. Beim negativen Ausgleich werden Massen abgetragen, z. B. durch Bohren, Schleifen oder Fräsen. Aus dem Stand der Technik ist es bekannt, Nuten vorzusehen, in welchen Wuchtgewichte befestigt werden. Die bekannten Lösungen sind allerdings vergleichsweise aufwendig und nicht dauerhaft. So weisen die Nuten oft komplizierte bzw. aufwendig herzustellende Geometrien auf. Die Wuchtgewichte selbst sind meist aufwendig gestaltet, um verschraubt oder verklemmt werden zu können. Oft ist auch keine komplett stufenlose Anordnung der Wuchtgewichte in den Nuten möglich.

Die US 7,656,609 B1 offenbart einen Motor für eine Festplatte, wobei ein Rotor zumindest drei biegsame Ausgleichselemente aufweist.

Die DE 10 2009 003 056 A1 betrifft eine Verstelleinrichtung für einen Rotationskörper, insbesondere einen Lüfter eines Kühlgebläses eines Verbrennungsmotors oder eine Welle oder einen Rotor eines Elektromotors. Mittels der Verstelleinrichtung ist eine um die Rotationsachse rotierbare Masse bezüglich der Rotationsachse verlagerbar.

Die WO 00/65323 betrifft ein Verfahren zum Wuchten sowie ein Wuchtelement. Insbesondere ist eine scheibenförmige Anordnung vorgesehen, welche eine Vielzahl von Vorsprüngen aufweist, welche verbogen werden können.

Die DE 10 2013 208 456 A1 betrifft ein Wuchtelement sowie ein Verfahren zum Auswuchten einer Kupplung, mit deren Hilfe eine Kupplung ausgewuchtet werden kann, wobei ein Wuchtelement einen Schaft zum Einsetzen in eine Gehäuseöffnung aufweist.

Die GB 619 587 betrifft einen Rotationskörper für elektrische Maschinen, bei welchem in stirnseitig ausgebildete Nuten Wuchtgewichte angeordnet werden können.

Die DE 11 52 749 betrifft ein Verfahren zum Aufbringen von Auswuchtgewichten an den stirnseitigen Kurzschlussringen von Läufern elektrischer Maschinen, wobei in die Kurzschlussringe aus verformbarem Metall durch Aufspreizen sich selbst befestigende Teile eingedrückt werden, die entweder selbst als Auswuchtgewichte oder als Träger für zusätzliche Auswuchtgewichte dienen.

Die DE 10 2012 218 716 A1 betrifft eine Rotoranordnung für eine elektrische Maschine sowie ein Verfahren zur Herstellung einer Rotoranordnung. Ferner umfasst die Erfindung eine elektrische Maschine mit einer genannten Rotoranordnung. Ein Wuchtelement ist mittels Presssitz in einer Ausnehmung des Rotors angeordnet.

Die US 5903967 betrifft ein Verfahren zum Herstellen eines Doppelzylinder-Körpers.

Die WO 15113434 A1 betrifft ein Verfahren zum Messen und Bestimmen der Unwucht eines Rotors. Die EP2924853 A1 betrifft einen Rotor der an einer Stirnseite eine verjüngende Nut aufweist, in die eine oder mehrere Nuteinsätze einsetzbar sind, um eine Wuchtung des Rotors zu ermöglichen.

Es ist daher eine Aufgabe der vorliegenden Erfindung, einen Rotationskörper, einen Elektromotor sowie ein Verfahren zum Wuchten eines Rotationskörpers anzugeben, welche die vorgenannten Nachteile beseitigen und dabei einfach und kostengünstig sind.

Diese Aufgabe wird durch einen Rotationskörper gemäß Anspruch 1, einen Elektromotor gemäß Anspruch 7 sowie durch ein Verfahren gemäß Anspruch 9 gelöst. Weitere Vorteile und Merkmale ergeben sich aus den Unteransprüchen sowie der Beschreibung und den beigefügte Figuren.

Erfindungsgemäß weist ein Rotationskörper, insbesondere ein Rotor für einen Elektromotor, eine wenigstens abschnittsweise umlaufende Nut auf, wobei in der Nut zumindest ein Einsatz befestigt oder befestigbar ist, und wobei die Befestigung durch ein Verformen bzw. Umformen des zumindest einen Einsatzes und/oder der Nut erfolgt, wobei die Nut abschnittsweise durch ein Zusatzbauteil gebildet ist, welches, stirnseitig, an dem Rotationskörper befestigt ist. Bei dem Rotationskörper handelt es sich insbesondere um einen Körper, welcher drehbar gelagert ist oder drehbar gelagert werden soll/kann. Gemäß einer Ausführungsform ist der Rotationskörper beispielsweise auch im Wesentlichen rotationssymmetrisch ausgebildet. Mit einem Rotationskörper kann aber auch ein Körper gemeint sein, welcher nicht rotationssymmetrisch ist, wie beispielsweise eine Kurbelwelle. Bevorzugt handelt es sich bei der umlaufenden Nut um eine geschlossene Nut, mit anderen Worten also um eine vollständig umlaufende Nut, wobei die Nut am Rotationskörper sowohl umfänglich, als auch stirnseitig angeordnet sein kann. Gegebenenfalls sind auch mehrere Nuten vorhanden, welche stirnseitig und/oder an einer Umfangsseite des Rotationskörpers angeordnet sind. Vorteilhafterweise erfolgt nun die Befestigung des Einsatzes, welcher das Wuchtgewicht/Ausgleichsgewicht darstellt, ohne dass hierzu irgendwelche Zusatzelemente wie Schrauben, Kleber etc. notwendig sind. Der Einsatz ist also mit Vorteil einteilig ausgebildet.

Gemäß einer bevorzugten Ausführungsform umfasst der Rotationskörper einen Stirnabschnitt, welcher sich im Wesentlichen senkrecht zu einer Rotationsachse des Rotationskörpers erstreckt, wobei die zumindest eine Nut im und/oder am Stirnabschnitt angeordnet ist. Bevorzugt handelt es sich um eine umfänglich geschlossene Nut in der Form eines Kreisrings. Eine derartige Ausgestaltung hat den Vorteil, dass die Fliehkräfte des in der Nut angeordneten bzw. befestigten Einsatzes bzw. der Einsätze über die Nut abgefangen werden können.

Zweckmäßigerweise ist das Verformen, durch welches die Befestigung erfolgt, ein elastisches und/oder plastisches Verformen des Einsatzes und/oder der Nut. Gemäß einer bevorzugten Ausführungsform erfolgt das Befestigen durch ein plastisches Verformen, insbesondere durch ein Verstemmen. Damit wird eine kraft- und formschlüssige Verbindung zwischen dem Einsatz und der Nut erreicht. Die Randbereiche der Nut und/oder des Einsatzes werden dabei derart verformt, dass sie sich unlösbar ineinander Verkeilen. Zum Verstemmen eignen sich alle Materialien, die sich plastisch verformen lassen, wie z. B. Kunststoffe und Metalle. Vorteilhafterweise sind durch diese Ausgestaltung auch unterschiedliche Materialien miteinander verbindbar, wobei als bevorzugte Materialien für den Einsatz/das Auswuchtgewicht z. B. Zink, Stahl, Zinn, Wolfram oder Kunststoffe, welche eine ausreichend hohe Dichte besitzen, bzw. eine Kombination der vorgenannten Materialien verwendet werden. Zweckmäßigerweise ermöglicht die Befestigung durch das Verformen die Verwendung von Einsätzen unterschiedlichster Materialien. Alternativ und/oder zusätzlich kann die Ausgleichsmasse sehr leicht über eine Länge des Einsatzes bzw. des Auswuchtgewichtes bestimmt werden. Zum Verstemmen wird beispielsweise ein geeignetes Werkzeug verwendet, welches eine Wirkfläche aufweist, die breiter ist als die Nut, sodass nach Anlage der Werkzeugfläche an dem in der Nut angeordneten Einsatz mit einem Hieb/Schlag ein Verstemmen/Verformen des Einsatzes und der Nut erfolgen kann.

Alternativ ist aber auch ein elastisches Verformen bevorzugt, wobei hier insbesondere ein elastisches Verformen der Nut gemeint ist. Zweckmäßigerweise wird beispielsweise die Nut mit einem Werkzeug etwas aufgehebelt, nämlich so weit, dass der Einsatz an einer gewünschten Stelle eingesetzt werden kann. Nach Entfernen des Werkzeugs federt die Nut quasi zurück bzw. eine Seitenwand der Nut, und der Einsatz ist kraftschlüssig bzw. form- und/oder kraftschlüssig befestigt.

Bevorzugt handelt es sich bei der Nut um eine "gebaute" Nut. So ist die Nut ganz oder zumindest abschnittsweise durch ein Zusatzbauteil gebildet, welches, insbesondere stirnseitig und/oder umfänglich, an dem Rotationskörper befestigt ist. Bei diesem Zusatzbauteil kann es sich beispielsweise um ein Ringelement handeln, welches am Rotationskörper, beispielsweise stirnseitig, form- und/oder kraftschlüssig befestigt, insbesondere angeschraubt, ist. Das Ringelement formt zweckmäßigerweise eine der beiden Seitenflanken der Nut. Bevorzugt kann nun die Befestigung des Einsatzes über die Befestigung des Ringelements an dem Rotationskörper erfolgen. Dies bedeutet, dass der Einsatz an einer gewünschten Position in der Nut befestigt wird, wobei das vorgenannte Ringelement hierbei noch nicht vollständig befestigt, insbesondere angeschraubt, ist. Erst dadurch wird überhaupt ermöglicht, dass der Einsatz innerhalb der Nut angeordnet werden kann. Das Ringelement ist zweckmäßigerweise aber zumindest so weit befestigt, dass der Einsatz an einer gewünschten Position gehalten wird. Die eigentliche Befestigung erfolgt dann über das Verschrauben des Ringelements, sodass auch bei dieser Ausführungsform der Einsatz mit Vorteil formschlüssig bzw. form- und kraftschlüssig befestigt ist. Die hierbei auftretenden elastischen oder plastischen Verformungen können infinitesimal klein ausfallen, sind aber dennoch so hoch, dass eine dauerhafte Befestigung des Einsatzes an der vorgegebenen Position ermöglicht ist.

Gemäß einer Ausführungsform ist der zumindest eine Einsatz ein Profildraht. Zweckmäßigerweise handelt es sich also um ein sehr kostengünstiges Bauteil, welches einfach auf die gewünschte Länge abgeschnitten werden kann. Ein bevorzugter Querschnitt des Einsatzes bzw. des Profildrahtes ist beispielsweise quadratisch oder rechteckig. Gleiches gilt für die Nut. In verschiedenen Ausführungsformen liegen die Seitenlängen in einem Bereich von etwa 2-8 mm. Alternativ können auch andere Querschnittsformen bei dem Einsatz/Profildraht bzw. der Nut vorgesehen sein, wobei die größten Vorteile immer dann erzielt werden, wenn eine möglichst einfache Geometrie verwendet wird.

Gemäß einer bevorzugten Ausführungsform ist der Querschnitt der zumindest einen Nut konstant ausgebildet. Dies ermöglicht, dass der oder die Einsätze an einer beliebigen Position in der Nut angebracht werden können, mit anderen Worten in jedem Winkel. Mit Vorteil sind keine Nutfenster oder dergleichen nötig, welche zum Einführen bzw. Anordnen des Einsatzes in der Nut nötig sind. Der Einsatz kann an jeder beliebigen Stelle der Nut sowohl eingesetzt als auch befestigt werden, wobei hierzu hinsichtlich Form und Geometrie des Einsatzes bzw. der Nut keinerlei Anpassungen nötig sind. Die Nut ist vorteilhafterweise also entlang seines Umfangs bzw. entlang seiner Länge vollständig gleich ausgebildet bzw. dimensioniert.

Gemäß einer Ausführungsform ist der Rotationskörper ein Bauteil eines Motors, beispielsweise eines Elektromotors oder eines Verbrennungsmotors. Beispielsweise ist der Rotationskörper eine Nockenwelle, eine Kurbelwelle eines Verbrennungsmotors oder ein Rotor eines Elektromotors.

Die Erfindung richtet sich auch auf einen Elektromotor, insbesondere auf einen Hochdrehzahlelektromotor, wie einen stromerregten Synchronmotor, umfassend einen (Hochdrehzahl-)Rotor, welcher zumindest eine wenigstens abschnittsweise umlaufende Nut aufweist, wobei in der Nut zumindest ein Einsatz befestigt oder befestigbar ist, und wobei die Befestigung durch ein Verformen des zumindest einen Einsatzes und/oder der Nut erfolgt, wobei die Nut abschnittsweise durch ein Zusatzbauteil gebildet ist, welches, stirnseitig, an dem Rotationskörper befestigt ist. Gemäß verschiedener Ausführungsformen liegen die Durchmesser der (Hochdrehzahl-)Rotoren in einem Bereich von etwa 110 bis 160 mm. Maximaldrehzahlen liegen bei etwa 30000 1/min, Spitzenleistungen bei etwa 90 bis 400 kW. Für den erfindungsgemäßen Elektromotor gelten die im Zusammenhang mit dem erfindungsgemäßen Rotationskörper erwähnten Vorteile und Merkmale analog und entsprechend sowie umgekehrt.

Zweckmäßigerweise ist die Nut, welche insbesondere eine geschlossene Nut ist, durch ein Zusatzelement, insbesondere einen Stützring, gebildet, welcher stirnseitig am Rotor befestigt ist. Bei dem Stützring handelt es sich um ein Bauteil, welches ausgelegt ist, radiale Lasten von auf dem Rotor angeordneten Wicklungen zu absorbieren bzw. zu verteilen. Zweckmäßigerweise können mehrere derartige Stützringe vorgesehen sein, welche z. B. an beiden axialen Enden des Rotors befestigt sind. Bevorzugt formen jeweils zwei derartige Zusatzelemente bzw. Stützringe dazwischenliegend eine bzw. die Nut. Zweckmäßigerweise ist ein Stützring derart ausgebildet, dass er zumindest eine Seitenflanke der Nut formt bzw. mit formt.

Allgemein handelt es sich bei dem, insbesondere ringförmigen, Zusatzelement, um ein Bauteil, welches z. B. stirnseitig am oder im Bereich des Rotors befestigt ist, wobei die Befestigung bevorzugt form- und/kraftschlüssig, beispielsweise über eine Schraubverbindung, erfolgt.

Die Erfindung richtet sich auch auf ein Verfahren zum Wuchten eines Rotationskörpers, insbesondere eines Rotors eines Elektromotors, umfassend die Schritte:
- Bereitstellen eines zu wuchtenden Rotationskörpers;
- Anordnen zumindest eines Einsatzes in einer Nut des Rotationskörpers;
- Befestigen des zumindest einen Einsatzes durch Verformen des zumindest einen Einsatzes und/oder der Nut, wobei die Nut abschnittsweise durch ein Zusatzbauteil geformt ist, welches stirnseitig am Rotationskörper befestigt.

Die im Zusammenhang mit dem erfindungsgemäßen Rotationskörper bzw. Elektromotor erwähnten Vorteile und Merkmale gelten analog und entsprechend auch für das erfindungsgemäße Verfahren bzw. umgekehrt.

Gemäß einer Ausführungsform ist der Einsatz derart ausgelegt und dimensioniert, dass er vor dem Verformen, angeordnet in der Nut, diese etwa bis zu 0,5 bis 1 mm überragt. Zweckmäßigerweise schließt der Einsatz nach dem Verformen im Wesentlichen bündig mit der umliegenden Oberfläche ab. Alternativ ist der Einsatz (vor dem Verformen) aber auch kleiner und überragt die Nut nicht bzw. schließt bündig mit ihr ab.

Grundsätzlich kann der Rotationskörper bzw. der Einsatz ein oder mehrere Befestigungsbereiche aufweisen, wobei ein Befestigungsbereich derjenige Bereich ist, an welchem ein Werkzeug zum plastischen Verformen, z. B. ein Verstemmwerkzeug, angesetzt wurde oder wird. Insbesondere handelt es sich bei dem Befestigungsbereich um einen Verformungsbereich, insbesondere um einen plastischen Verformungsbereich. Insbesondere, wenn es sich um einen längeren Einsatz (entlang der Längsrichtung der Nut) handelt, sind z. B. zwei, drei oder mehr Befestigungsbereiche, welche gemäß einer Ausführungsform im Wesentlichen rund sind, vorgesehen. Mit Vorteil reichen aber wenige Befestigungsbereiche aus. Vor allem ist es nicht nötig, den Einsatz entlang seiner gesamten Länge zu befestigen, insbesondere also zu verformen. Das Vorsehen der Befestigungsbereiche/Verformungsbereiche ist daher äußerst vorteilhaft, da auch längere Einsätze auf diese Weise schnell und sicher befestigt werden können. Alternativ ist es auch möglich, insbesondere wenn der Einsatz sehr kurz ist, nur einen Befestigungsbereich vorzusehen, welcher dann ggf. den Einsatz über seine gesamte Länge überdeckt.

Bevorzugt ist die Nut zumindest abschnittsweise durch ein Zusatzbauteil geformt, welches am Rotationskörper befestigt ist. Gemäß einer Ausführungsform erfolgt das Verformen durch das Befestigen des Zusatzbauteils am Rotationskörper. Insbesondere erfolgt also das Befestigen des Einsatzes durch ein Verspannen des Zusatzbauteils, wobei es sich bei dem Zusatzbauteil beispielsweise um einen Stützring eines Rotors eines Elektromotors handeln kann. Dabei ist die Idee vorliegend nicht auf einen bestimmten Typ von Rotor bzw. auf einen bestimmten Typ von Elektromotor begrenzt. Vielmehr kann die Idee für sämtliche Rotationskörper verwendet werden.

Weitere Vorteile und Merkmale ergeben sich aus der nachfolgenden Beschreibung von bevorzugten Ausführungsformen von Rotationskörpern mit Bezug auf die beigefügten Figuren. Verschiedene Merkmale verschiedener Ausführungsformen können dabei im Rahmen der Erfindung miteinander kombiniert werden.

Es zeigen:
- Fig. 1:: eine perspektivische Darstellung eines Rotationskörpers mit einer stirnseitig angeordneten Nut;
- Fig. 2:: eine Detailansicht einer Nut im Querschnitt sowie eines Werkzeugs zum Verstemmen eines in der Nut angeordneten Einsatzes;
- Fig. 3:: eine teilweise Schnittdarstellung eines Rotationskörpers, bei welchem eine Nut teilweise durch ein Zusatzbauteil geformt bzw. gebildet ist;
- Fig. 4:: eine Draufsicht auf eine Nut.

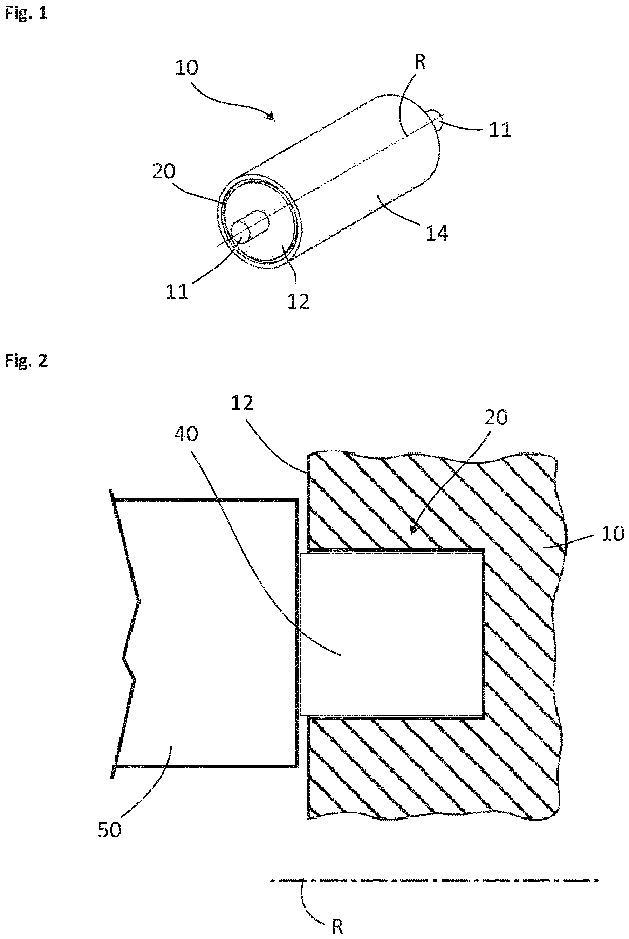

**Fig. 1** zeigt in einer perspektivischen Darstellung einen Rotationskörper 10, welcher eine Rotationsachse R aufweist. Der Rotationskörper 10 weist einen Umfangsabschnitt 14 und einen Stirnabschnitt 12 auf. In dem Stirnabschnitt 12 ist eine kreisringförmige Nut 20 angeordnet. Bei dem Rotationskörper 10 handelt es sich beispielsweise um einen Rotor eines Elektromotors, welcher über Wellenabschnitte 11 gelagert ist. Insbesondere kann es sich um einen Hochdrehzahlelektromotor handeln.

**Fig. 2** zeigt nun in einer Schnittdarstellung eine Nut 20 eines Rotationskörpers 10, in welcher ein Einsatz, mit anderen Worten ein Auswuchtgewicht, angeordnet ist. Der Schnitt verläuft quer zur Nut 20. Die Nut 20 ist an einem Stirnabschnitt 12 des Rotationskörpers 10, welcher eine Rotationsachse R aufweist, angeordnet bzw. ausgebildet. In der hier gezeigten Anordnung ist ein Einsatz 40 in der Nut 20 noch nicht befestigt. Dies erfolgt erst durch ein Verformen des Einsatzes und/oder der Nut 20. Zweckmäßigerweise erfolgt das Fixieren des Einsatzes durch einen Verstemmprozess, welcher beispielweise durch das mit dem Bezugszeichen 50 skizzierte schematisch dargestellte Werkzeug realisiert wird. Durch einen Hieb bzw. Schlag nach rechts können durch das Werkzeug 50, der Einsatz 40 bzw. die Nut 20 derart verformt werden, dass eine dauerhafte form- und kraftschlüssige Verbindung gegeben ist.

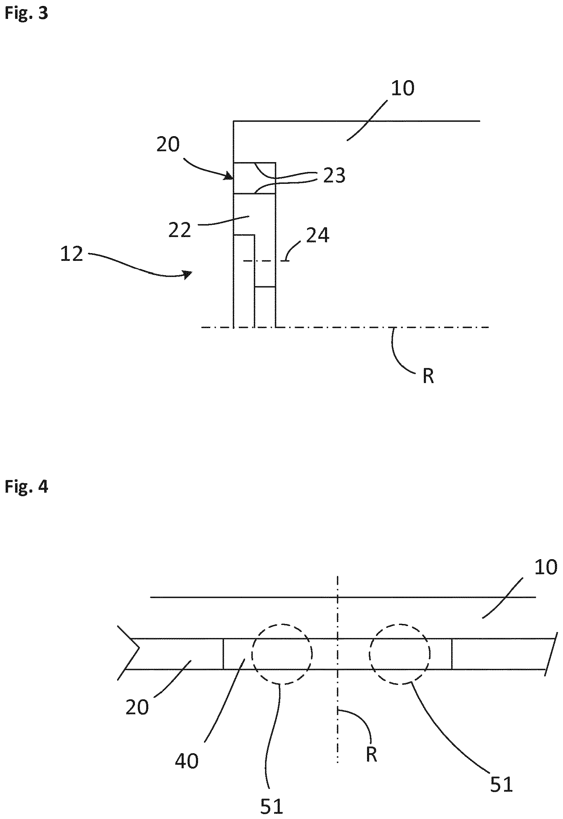

In der **Fig. 3** ist eine Schnittansicht eines Rotationskörpers 10, welcher sich entlang einer Rotationsachse R erstreckt, skizziert. Auch dieser weist an einem Stirnabschnitt 12 eine Nut 20 auf. Die Nut 20 ist hier durch ein Zusatzbauteil 22 geformt. Mit anderen Worten wird eine der Seitenflanken 23 der Nut 20 durch ein Zusatzbauteil 22 geformt, welches form- und/oder kraftschlüssig, beispielsweise durch eine Schraubverbindung 24, mit dem Rotationskörper verbunden ist. Hierdurch ist es möglich, über die Befestigung des Zusatzbauteils 22 an dem Rotationskörper 10 ein in der Nut 20 angeordnetes (hier nicht gezeigtes) Auswuchtgewicht bzw. einen Einsatz zu befestigen. Handelt es sich bei dem Rotationskörper 10 beispielsweise um einen Rotor eines Elektromotors, kann es sich bei dem Zusatzbauteil 22 beispielsweise um einen Stützring handeln, vgl. z. B. den radial zum Zusatzbauteil 22 angeordneten (äußeren) Vorsprung/Stützring, welcher zusammen mit dem Zusatzbauteil 22 die Nut formt.

**Fig. 4** zeigt eine Draufsicht auf eine Nut 20, in welcher ein länglicher Einsatz 40 angeordnet bzw. befestigt ist. Insbesondere erfolgt bzw. erfolgte die Befestigung über ein plastisches Verformen des Einsatzes 20 bzw. der Nut 20 im Bereich der Befestigungsbereiche/Verformungsbereiche 51. An diesen Stellen wurde vorliegend das Werkzeug zum Verstemmen des Einsatzes 40 bzw. der Nut 20 angesetzt.

### Bezugszeichenliste

- 10: Rotationskörper, Rotor
- 11: Wellenabschnitt
- 12: Stirnabschnitt
- 14: Umfangsabschnitt
- 20: Nut
- 22: Zusatzbauteil, Zusatzelement, Stützring
- 23: Seitenflanke
- 24: Schraubverbindung
- 40: Einsatz
- 50: Werkzeug
- 51: Befestigungsbereich, Verformungsbereich
- R: Rotationsachse

## Patentansprüche

1. Rotationskörper (10),
welcher zumindest eine wenigstens abschnittsweise umlaufende Nut (20) aufweist,
wobei in der Nut (20) zumindest ein Einsatz (40) befestigt oder befestigbar ist,
wobei die Befestigung durch ein Verformen des zumindest einen Einsatzes (40) und/oder der Nut (20) erfolgt, und
wobei die Nut (20) abschnittsweise durch ein Zusatzbauteil (22) gebildet ist, welches stirnseitig an dem Rotationskörper (10) befestigt ist.

2. Rotationskörper (10) nach Anspruch 1,
umfassend einen Stirnabschnitt (12), welcher sich im Wesentlichen senkrecht zu einer Rotationsachse (R) des Rotationskörpers (10) erstreckt,
und
wobei die zumindest eine Nut (20) im und/oder am Stirnabschnitt (12) angeordnet ist.

3. Rotationskörper (10) nach Anspruch 1 oder 2,
wobei das Verformen ein plastisches Verformen ist.

4. Rotationskörper (10) nach einem der vorhergehenden Ansprüche,
wobei die Nut (20) zumindest abschnittsweise durch ein Zusatzbauteil (22) gebildet ist, welches umfänglich an dem Rotationskörper (10) befestigt ist.

5. Rotationskörper (10) nach einem der vorhergehenden Ansprüche,
wobei der zumindest eine Einsatz (40) ein Profildraht ist.

6. Rotationskörper (10) nach einem der vorhergehenden Ansprüche,
wobei ein Querschnitt der zumindest einen Nut (20) konstant ausgebildet ist.

7. Elektromotor,
umfassend einen Rotor, welcher zumindest eine wenigstens abschnittsweise umlaufende Nut (20) aufweist,
wobei in der Nut (20) zumindest ein Einsatz (40) befestigt oder befestigbar ist, und
wobei die Befestigung durch ein Verformen des zumindest einen Einsatzes (40) und/oder der Nut (20) erfolgt,
wobei die Nut (20) abschnittsweise durch ein Zusatzbauteil (22) gebildet ist, welches stirnseitig an dem Rotationskörper (10) befestigt ist.

8. Elektromotor nach Anspruch 7,
wobei die Nut (20) durch ein Zusatzelement, insbesondere einen Stützring (22), gebildet ist, welcher stirnseitig am Rotor befestigt ist.

9. Verfahren zum Wuchten eines Rotationskörpers,
umfassend die Schritte:
- Bereitstellen eines zu wuchtenden Rotationskörpers (10);
- Anordnen zumindest eines Einsatzes (40) in einer Nut (20) des Rotationskörpers (10);
- Befestigen des zumindest einen Einsatzes (40) durch Verformen des zumindest einen Einsatzes (40) und/oder der Nut (20), wobei die Nut (20) abschnittsweise durch ein Zusatzbauteil (22) geformt ist, welches stirnseitig am Rotationskörper (10) befestigt ist.

10. Verfahren nach Anspruch 9,
wobei das Verformen durch das Befestigen des Zusatzbauteils (22) am Rotationskörper (10) erfolgt.

## Claims

1. Rotational body (10),
which has at least one encircling groove (20) at least in portions;
wherein at least one insert (40) is fastened, or able to be fastened, in the groove (20);
wherein the fastening takes place by a deformation of the at least one insert (40) and/or the groove (20); and
wherein the groove (20) is in portions formed by an additional component (22) which is fastened to the rotational body (10) on the front end.

2. Rotational body (10) according to Claim 1,
comprising a front end portion (12) which extends so as to be substantially perpendicular to a rotation axis (R) of the rotational body (10); and
wherein the at least one groove (20) is disposed in and/or on the front end portion (12).

3. Rotational body (10) according to Claim 1 or 2,
wherein the deformation is a plastic deformation.

4. Rotational body (10) according to one of the preceding claims,
wherein the groove (20) is at least in portions formed by an additional component (22) which is fastened circumferentially to the rotational body (10).

5. Rotational body (10) according to one of the preceding claims,
wherein the at least one insert (40) is a profile wire.

6. Rotational body (10) according to one of the preceding claims,
wherein a cross section of the at least one groove (20) is designed to be constant.

7. Electric motor,
comprising a rotor which has at least one encircling groove (20) at least in portions;
wherein at least one insert (40) is fastened, or able to be fastened, in the groove (20);
wherein the fastening takes place by a deformation of the at least one insert (40) and/or the groove (20); and
wherein the groove (20) is in portions formed by an additional component (22) which is fastened to the rotational body (10) on the front end.

8. Electric motor according to Claim 7,
wherein the groove (20) is formed by an additional element, in particular a support ring (22) which is fastened to the rotor on the front end.

9. Method for balancing a rotational body,
comprising the steps of:
- providing a rotational body (10) to be balanced;
- disposing at least one insert (40) in a groove (20) of the rotational body (10);
- fastening the at least one insert (40) by deforming the at least one insert (40) and/or the groove (20),
wherein the groove (20) is in portions formed by an additional component (22) which is fastened to the rotational body (10) on the front end.

10. Method according to Claim 9,
wherein the deformation takes place by fastening the additional component (22) to the rotational body (10).

## Revendications

1. Corps de rotation (10),
qui présente au moins une rainure (20) s'étendant au moins par sections sur son pourtour,
dans lequel au moins un insert (40) est fixé ou pouvant être fixé dans la rainure (20),
dans lequel la fixation est effectuée par une déformation de l'au moins un insert (40) et/ou de la rainure (20), et
dans lequel la rainure (20) est formée par sections par un composant supplémentaire (22) qui est fixé frontalement sur le corps de rotation (10).

2. Corps de rotation (10) selon la revendication 1,
comprenant une section frontale (12) qui s'étend essentiellement perpendiculairement à un axe de rotation (R) du corps de rotation (10), et
dans lequel l'au moins une rainure (20) est agencée dans et/ou sur la section frontale (12).

3. Corps de rotation (10) selon la revendication 1 ou 2,
dans lequel la déformation est une déformation plastique.

4. Corps de rotation (10) selon l'une quelconque des revendications précédentes,
dans lequel la rainure (20) est formée au moins par sections par un composant supplémentaire (22) qui est fixé sur la circonférence du corps de rotation (10).

5. Corps de rotation (10) selon l'une quelconque des revendications précédentes,
dans lequel l'au moins un insert (40) est un fil profilé.

6. Corps de rotation (10) selon l'une quelconque des revendications précédentes,
dans lequel une section transversale de l'au moins une rainure (20) est réalisée de manière constante.

7. Moteur électrique,
comprenant un rotor qui présente au moins une rainure (20) s'étendant au moins par sections sur son pourtour,
dans lequel au moins un insert (40) est fixé ou peut être fixé dans la rainure (20), et
dans lequel la fixation est effectuée par une déformation de l'au moins un insert (40) et/ou de la rainure (20),
dans lequel la rainure (20) est formée par sections par un composant supplémentaire (22) qui est fixé frontalement sur le corps de rotation (10).

8. Moteur électrique selon la revendication 7,
dans lequel la rainure (20) est formée par un élément supplémentaire, notamment une bague d'appui (22), qui est fixée frontalement au rotor.

9. Procédé d'équilibrage d'un corps de rotation, comprenant les étapes suivantes :
- la fourniture d'un corps de rotation (10) à équilibrer ;
- l'agencement d'au moins un insert (40) dans une rainure (20) du corps de rotation (10) ;
- la fixation de l'au moins un insert (40) par déformation de l'au moins un insert (40) et/ou de la rainure (20), la rainure (20) étant formée par sections par un composant supplémentaire (22) qui est fixé frontalement au corps de rotation (10).

10. Procédé selon la revendication 9,
dans lequel la déformation est effectuée en fixant le composant supplémentaire (22) au corps de révolution (10) .
